**Europäisches Patentamt**

**European Patent Office**

**Office européen des brevets**

(19)

(11) Veröffentlichungsnummer: **0 066 291**
**B1**

(12) **EUROPÄISCHE PATENTSCHRIFT**

(45) Veröffentlichungstag der Patentschrift:
**29.01.86**

(51) Int. Cl.⁴: **G 03 B 21/64, G 03 B 35/00**

(21) Anmeldenummer: **82104803.0**

(22) Anmeldetag: **02.06.82**

(54) **Rahmen für Diapositive.**

(30) Priorität: **03.06.81 DE 3122094**

(43) Veröffentlichungstag der Anmeldung:
**08.12.82 Patentblatt 82/49**

(45) Bekanntmachung des Hinweises auf die Patenterteilung:
**29.01.86 Patentblatt 86/5**

(84) Benannte Vertragsstaaten:
**AT CH DE FR GB IT LI NL**

(56) Entgegenhaltungen:
**AT - B - 275 186**
**DE - C - 953 924**
**FR - A - 1 586 215**
**GB - A - 1 061 391**
**US - A - 1 811 123**

(73) Patentinhaber: **PHOTO UNIVERSAL Deuscher KG GmbH & Co., Max-Planck-Strasse 28, D-7012 Fellbach (DE)**

(72) Erfinder: **Opitz, Wilhelm, Am Grasweg 16, D-2105 Seevetal 2 (DE)**
Erfinder: **Meinunger, Helmut, Ehrenfelsstrasse 3, D-8000 München (DE)**

(74) Vertreter: **Schaefer, Gerhard, Dr., Seitnerstrasse 13, D-8023 Pullach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft einen Rahmen für Diapositive zum Einschieben in ein stereoskopisches Betrachtungsgerät.

Es sind stereoskopische Betrachtungsgeräte für Diapositive bekannt (DE-U-7 032 664), in die die beiden Diapositive getrennt eingesetzt werden. Derartige Betrachtungsgeräte haben den Nachteil, dass die Diapositive sehr sorgfältig geordnet und bezeichnet werden müssen, damit sie einerseits jeweils zueinander passen, andererseits auch in der richtigen Relation eingesetzt werden.

Einen gemeinsamen Rahmen für die beiden Stereo-Diapositive zeigt die DE-A-953924. Der Erfindung liegt die Aufgabe zugrunde, einen Rahmen zu schaffen, mit dessen Hilfe in einfacher Weise zusammengehörige Diapositive für die stereoskopische Betrachtung stets in der richtigen Anordnung in das Betrachtungsgerät eingeführt werden.

Erfindungsgemäss wird dies dadurch erreicht, dass der Rahmen einen durchgehenden Grundkörper aufweist, der zwei mit Abstand nebeneinander angeordnete Durchblicköffnungen von der Grösse der Diapositive aufweist und der senkrecht zu seiner Längsachse und beiderseits der Durchblicköffnungen mit Schlitzen für den Einschub von gerahmten Diapositiven versehen ist.

Die Schlitze können dabei so ausgebildet sein, dass die gerahmten Diapositive mit geringem Widerstand eingeschoben werden können und so nicht von selbst herausfallen. Sie können auch eingeklebt werden.

Gemäss einer besonders vorteilhaften Ausbildung der Erfindung ist in den Schlitzen mindestens eine leicht gegen die Ebene der Diapositive geneigte federnde Zunge angeordnet. Dies ermöglicht ein einfaches Einschieben und gegebenenfalls auch wieder Herausnehmen des eingesetzten gerahmten Diapositivs.

Gemäss einer Weiterbildung dieser Ausführungsform kann an der der Zunge gegenüberliegenden Wand des Schlitzes mindestens eine noppenartig vorstehende Anlagefläche vorgesehen sein. Derartige Noppen dienen zusätzlich der definierten Lagerung und der einfachen Auswechselbarkeit.

Der erfindungsgemässe Rahmen kann an seinem einen Ende einen Betätigungsgriff aufweisen, der die Handhabung erleichtert.

Am anderen Ende kann vorteilhafterweise eine Anschlagkante vorgesehen sein, die mit einer entsprechenden Anlagefläche im Betrachtungsgerät in Eingriff bringbar ist. Hierdurch wird eine definierte Lage des Rahmens im Betrachtungsgerät sichergestellt.

Gemäss einer besonders vorteilhaften Ausführungsform sind als Anschlagkanten zwei Ausnehmungen am Ende der Längskanten des Rahmens an der dem Betätigungsgriff gegenüberliegenden Seite vorgesehen. Zur Arretierung des erfindungsgemässen Rahmens im Betrachtungsgerät weist der Rahmen an einer Längskante vorzugsweise in der Mitte zwischen den beiden Durchblicköffnungen eine keilförmige Kerbe auf, in die eine entsprechend ausgebildete federnde Nase des Betrachtungsgerätes einrastbar ist.

Weitere Einzelheiten und Vorteile der Erfindung können dem in der Zeichnung dargestellten Ausführungsbeispiel entnommen werden. Es zeigen:

Figur 1 eine Draufsicht auf den erfindungsgemässen Rahmen;
Figur 2 eine Seitenansicht des in Figur 1 dargestellten Rahmens;
Figur 3 einen vergrösserten Schnitt längs der Linie III–III in Figur 1.

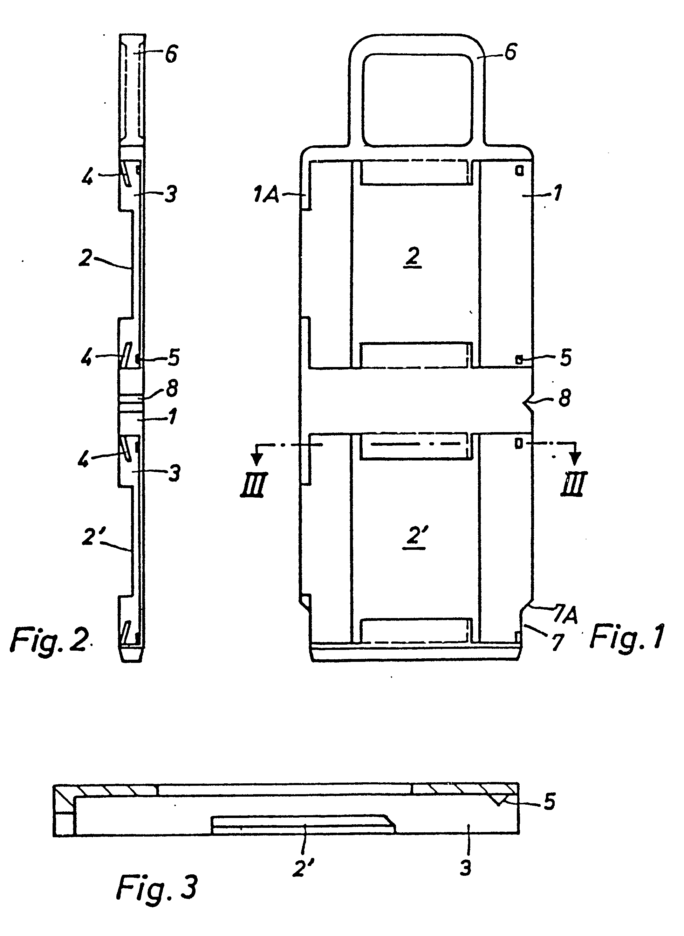

Der erfindungsgemässe Rahmen besteht im wesentlichen aus einem Grundkörper 1, der zweckmässigerweise aus Kunststoff besteht und im Spritzgussverfahren hergestellt ist. Der Rahmen weist zwei im Abstand voneinander angeordnete Durchblicköffnungen 2, 2' auf, deren Grösse der Bildfläche von Diapositiven entspricht. Von einer Längskante des Grundkörpers 1 (im dargestellten Ausführungsbeispiel in Figur 1 von der rechten Seite her) erstrecken sich Schlitze 3 parallel zu den Seitenkanten der Durchblicköffnungen 2, 2', wie dies insbesondere der Figur 2 zu entnehmen ist. Im Bereich der entgegengesetzten Längskante sind Anschläge 1A vorgesehen, die die Schlitze 3 in dieser Richtung begrenzen.

In den Schlitzen 3 sind elastische und vorzugsweise bei der Herstellung des Rahmens einstückig mit diesem hergestellte elastische Zungen 4 vorgesehen, die leicht gegen die Ebene der Diapositive geneigt sind. Ihnen gegenüber sind noppenartige Vorsprünge 5 angeordnet.

Am einen Ende des erfindungsgemässen Rahmens ist ein Betätigungsgriff 6 angeordnet, der der leichteren Handhabung dient. Am anderen Endteil sind in den beiden Längskanten Ausnehmungen 7 vorgesehen, deren schräg verlaufende Kanten 7A eine Anschlagkante bilden, die mit entsprechend ausgebildeten Kanten im Betrachtungsgerät in Eingriff bringbar sind und so eine definierte Lage des Rahmens im Gerät sicherstellen. Um den Rahmen an dieser definierten Stelle im Betrachtungsgerät festzuhalten, ist in einer Längskante eine kerbenförmige Ausnehmung 8 vorgesehen, in die eine entsprechend ausgebildete federnde Nase des Betrachtungsgerätes einrastbar ist.

Der erfindungsgemässe Rahmen wird in der Weise verwendet, dass in die beiden Schlitze 3 je eines von zwei zusammengehörigen, bereits gerahmten Diapositiven eingesetzt und bis zum Anschlag 1A im Grundkörper des Rahmens durchgeschoben wird. Infolge der federnden Wirkung der Zunge 4 werden die Diapositive in dieser Lage gegen die Noppen 5 gedrückt und so festgehalten. Der Rahmen kann dann am Handgriff 6 in das Betrachtungsgerät eingeschoben werden.

## Patentansprüche

1. Rahmen für Diapositive zum Einschieben in ein stereoskopisches Betrachtungsgerät, dadurch gekennzeichnet, dass der Rahmen einen durchgehenden Grundkörper (1) aufweist, der zwei mit Abstand nebeneinander angeordnete Durchblicköffnungen (2, 2') von der Grösse der Diapositive aufweist und der senkrecht zu seiner Längsachse und beiderseits der Durchblicköffnungen (2, 2') mit Schlitzen (3) für den Einschub von gerahmten Diapositiven versehen ist.

2. Rahmen nach Anspruch 1, dadurch gekennzeichnet, dass in den Schlitzen (3) mindestens eine leicht gegen die Ebene der Diapositive geneigte federnde Zunge (4) angeordnet ist.

3. Rahmen nach Anspruch 2, dadurch gekennzeichnet, dass an der der Zunge (4) gegenüberliegenden Wand des Schlitzes (3) mindestens eine noppenartig vorgesehene Anlagefläche (5) vorgesehen ist.

4. Rahmen nach Anspruch 1 oder 2, dadurch gekennzeichnet, dass an seinem einen Ende ein Betätigungsgriff (6) angeordnet ist.

5. Rahmen nach einem der vorhergehenden Ansprüche, dadurch gekennzeichnet, dass an einem Ende eine Anschlagkante (7A) vorgesehen ist.

6. Rahmen nach Anspruch 5, dadurch gekennzeichnet, dass mindestens eine Ausnehmung (7) am Ende der Längskanten des Rahmens an der dem Betätigungsgriff gegenüberliegenden Seite eine Anschlagkante (7A) bildet.

7. Rahmen nach einem der vorhergehenden Ansprüche, dadurch gekennzeichnet, dass an einer Längskante, vorzugsweise in der Mitte zwischen den beiden Durchblicköffnungen (2, 2') eine keilförmige Kerbe (8) vorgesehen ist.

## Claims

1. Frame for slides for insertion in a stereoscopic observing apparatus, characterized in that the frame comprises a continuous base body (1) which has two viewing openings (2, 2') arranged spaced apart adjacent each other and having the size of the slides and which is provided perpendicularly to its longitudinal axis and on both sides of the viewing openings (2, 2') with slots (3) for the insertion of framed slides.

2. Frame according to claim 1, characterized in that in the slots (3) at least one resilient tongue (4) inclined slightly to the plane of the slides is disposed.

3. Frame according to claim 2, characterized in that at the wall of the slot (3) opposite the tongue (4) at least one knob-like bearing face (5) is provided.

4. Frame according to claim 1 or 2, characterized in that at its end an actuating grip (6) is disposed.

5. Frame according to any one of the preceding claims, characterized in that at one end a stop edge (7A) is provided.

6. Frame according to claim 5, characterized in that at least one recess (7) at the end of the longitudinal edges of the frame forms a stop edge (7A) at the side opposite the actuating grip.

7. Frame according to any one of the preceding claims, characterized in that at a longitudinal edge, preferably in the centre between the two viewing openings (2, 2'), a wedge-shaped notch (8) is provided.

## Revendications

1. Cadre pour diapositives à insérer dans un appareil d'observation stéréoscopique, caractérisé en ce que le cadre présente une structure de base (1) traversante qui est pourvue de deux ouvertures pour regarder à travers (2, 2') qui sont disposées l'une à côté de l'autre à une certaine distance et ont la taille des diapositives, et que le cadre est pourvu perpendiculairement par rapport à son axe longitudinal et des deux côtés des ouvertures pour regarder à travers (2, 2') de fentes (3) pour insérer des diapositives encadrées.

2. Cadre selon revendication 1, caractérisé en ce qu'est prévu dans les fentes (3) au moins une languette (4) à ressort inclinée légèrement par rapport au plan des diapositives.

3. Cadre selon revendication 2, caractérisé en ce que sur la paroi de la fente (3) opposée à la languette (4) est prévue au moins une surface d'appui (5) à en forme de bouton.

4. Cadre selon revendication 1 ou 2, caractérisé en ce qu'en une de ses extrémités est disposée une poignée de manutention (6).

5. Cadre selon l'une revendications précédentes, caractérisé en ce qu'est prévue à une des extrémités une arête de butée (7A).

6. Cadre selon revendication 5, caractérisé en ce qu'au moins une échancrure (7) sur l'extrémité des arêtes longues du cadre forme une arête de butée (7A) sur le côté opposé à la poignée de manutention.

7. Cadre selon l'une des revendications précedentes, caractérisé en ce que sur une arête longue, de préférence au milieu entre les deux ouvertures pour regarder à travers (2, 2'), est prévue une encoche en forme de coin.

Fig. 2

Fig. 1

Fig. 3